# EUROPEAN PATENT APPLICATION

(11) **EP 4 847 913 A1**
(43) Date of publication of application: **02.12.2026**
(21) Application number: 26181770.4
(22) Date of filing: 28.05.2026
(51) Int. Cl.: G01N 25/72

(54) **INSPECTING TURBINE ENGINE COMPONENT USING MEASURED TEMPERATURE DISTRIBUTION**

(30) Priority: 28.05.2025 US 202519221072
(71) Applicant: RTX Corporation, Farmington, CT 06032 (US)
(72) Inventor: SIW, Sin Chien, Simsbury, 06070 (US); GUSTAFSON, Eric F., Glastonbury, 06033 (US); OUYANG, Zhong, Glastonbury, 06033 (US); KIREJCZYK, Maria C., Murrells Inlet, 29576 (US)
(74) Representative: Dehns

(57) **Abstract**

A method of inspection is provided during which a first induction coil and a second induction coil are arranged with a turbine engine component. The turbine engine component includes an exterior surface. The turbine engine component is heated using the first induction coil and the second induction coil such that the exterior surface is a heated exterior surface. A temperature distribution is measured along the heated exterior surface to provide measurement data indicative of the temperature distribution. A characteristic of the turbine engine component is determined using the measurement data.

## Description

### BACKGROUND OF THE DISCLOSURE

### 1. Technical Field

This disclosure relates generally to component inspection and, more particularly, to non-destructive component inspection.

### 2. Background Information

Various non-destructive inspection methods are known in the art including ultrasonic inspection methods. While these known non-destructive inspection methods have various benefits, there is still room in the art for improvement particularly where the component to be inspected includes an exterior coating.

### SUMMARY OF THE DISCLOSURE

According to an aspect of the present disclosure, a method of inspection is provided during which a first induction coil and a second induction coil are arranged with a turbine engine component. The turbine engine component includes an exterior surface. The turbine engine component is heated using the first induction coil and the second induction coil such that the exterior surface is a heated exterior surface. A temperature distribution is measured along the heated exterior surface to provide measurement data indicative of the temperature distribution. A characteristic of the turbine engine component is determined using the measurement data.

According to another aspect of the present disclosure, another method of inspection is provided during which a heater is arranged with a turbine engine component. The heater includes a ferrite core and a first induction coil wrapped around the ferrite core. The turbine engine component includes an exterior surface. The turbine engine component is heated using the first induction coil such that the exterior surface becomes a heated exterior surface. A temperature distribution is measured along the heated exterior surface to provide measurement data indicative of the temperature distribution. Presence of a defect in the turbine engine component is determined based on the measurement data.

According to still another aspect of the present disclosure, another method of inspection is provided during which a turbine engine component is moved to an inspection area using a robotic manipulator. The turbine engine component includes an exterior surface. The turbine engine component is heated using one or more induction coils such that the exterior surface becomes a heated exterior surface. A temperature distribution is measured along the heated exterior surface to provide measurement data indicative of the temperature distribution. A characteristic of the turbine engine component is determined using the measurement data. The turbine engine component is moved into a first designated area using the robotic manipulator when the characteristic of the turbine engine component is determined to satisfy a specification for the turbine engine component. Alternatively, the turbine engine component is moved into a second designated area using the robotic manipulator when the characteristic of the turbine engine component is determined to not satisfy the specification for the turbine engine component.

The following optional features may be applied to any of the above aspects.

The first induction coil may be wrapped around a first section of the ferrite core. The heater may also include a second induction coil wrapped around a second section of the ferrite core. The heating of the turbine engine component may include heating the turbine engine component using the first induction coil and the second induction coil such that the exterior surface is the heated exterior surface.

The characteristic of the turbine engine component may be or otherwise indicative of presence of a defect in the turbine engine component.

The turbine engine component may include a body and a coating over the body. The characteristics of the turbine engine component may be or otherwise include a characteristic of the body.

The turbine engine component may be or otherwise include a rotor blade.

An attachment of the rotor blade may include the exterior surface.

The turbine engine component may be disposed between the first induction coil and the second induction coil.

A heater may include the first induction coil, the second induction coil and a core. The first induction coil may be wrapped around a first section of the core. The second induction coil may be wrapped around a second section of the core.

The turbine engine component may project into a channel in the core. The first section of the core and the second section of the core may be disposed to opposing sides of the channel.

The core may be C-shaped.

An end of the first section of the core may be disposed next to and spaced from a first exterior portion of the turbine engine component. An end of the second section of the core may be disposed next to and spaced from a second exterior portion of the turbine engine component.

The end of the first section of the core may be contoured to match a contour of the first exterior portion of the turbine engine component. In addition or alternatively, the end of the second section of the core may be contoured to match a contour of the second exterior portion of the turbine engine component.

The exterior surface may be located between the first induction coil and the second induction coil.

The temperature distribution may be measured using a non-contact temperature sensor.

The temperature distribution may be measured using an infrared camera.

The method may also include determining whether the characteristic of the turbine engine component satisfies a specification for the turbine engine component.

The method may also include moving the turbine engine component into a designated area using a robotic manipulator when the characteristic of the turbine engine component is determined to satisfy the specification for the turbine engine component.

The method may also include moving the turbine engine component into a designated area using a robotic manipulator when the characteristic of the turbine engine component is determined not to satisfy the specification for the turbine engine component.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a partial schematic illustration of an engine section for the aircraft propulsion system.
FIG. 3 is a partial schematic illustration of a rotor blade between a rotor disk and a rotor shroud.
FIG. 4 is a tip end view illustration of a blade airfoil.
FIG. 5 is a flow diagram of a method for inspecting one or more components of an aircraft powerplant.
FIG. 6 is a partial sectional illustration of the rotor blade with a coated body.
FIG. 7 is a partial sectional illustration of the rotor blade with an uncoated body.
FIG. 8 is a schematic illustration of a robotic manipulator configured to move components during an inspection.
FIG. 9 is a schematic illustration during an inspection of an exterior surface of a component.
FIG. 10 is a schematic illustration of an interface between an induction heater and an end of a rotor blade attachment.
FIG. 11 is a schematic illustration of an interface between the induction heater and a side of the rotor blade attachment.

### DETAILED DESCRIPTION

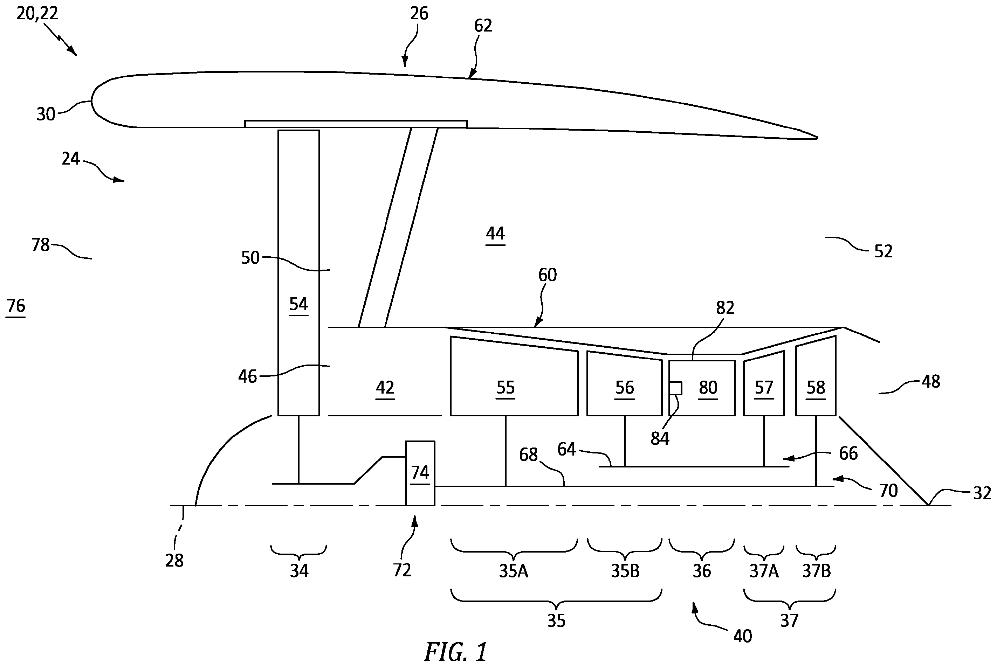

The present disclosure includes methods and systems for inspecting one or more components. This inspection is a non-destructive inspection and/or a non-contact inspection of the components as described below in further detail. For ease of description, the inspected components are described below as components of a powerplant 20 for an aircraft, an exemplary embodiment of which is shown in FIG. 1. The aircraft may be an airplane, a rotorcraft (e.g., a helicopter), a drone (e.g., an unmanned aerial vehicle (UAV)), or any other manned or unmanned aerial vehicle or system. The aircraft powerplant 20 may be a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications nor aircraft applications. The aircraft powerplant 20, for example, may also (or alternatively) be configured as an electrical power system for the aircraft; e.g., an auxiliary power unit (APU). In another example, the powerplant 20 may be configured as an electrical power system for a land-based (e.g., industrial), marine or other installation.

The aircraft propulsion system 22 of FIG. 1 includes a gas turbine engine 24 (e.g., a turbofan engine) housed within a stationary propulsion system housing 26. The aircraft propulsion system 22 extends axially along an axis 28 of the of the aircraft propulsion system 22 between an axial upstream, forward end 30 of the aircraft propulsion system 22 and an axial downstream, aft end 32 of the aircraft propulsion system 22. Briefly, the propulsion system axis 28 may be a centerline axis of the aircraft propulsion system 22, the turbine engine 24 and/or one or more of its members. The propulsion system axis 28 may also or alternatively be a rotational axis for one or more members of the turbine engine 24.

The aircraft propulsion system 22 and its turbine engine 24 of FIG. 1 include a propulsor section 34 (e.g., a fan section), a compressor section 35, a combustor section 36 and a turbine section 37. The compressor section 35 of FIG. 1 includes a low pressure compressor (LPC) section 35A and a high pressure compressor (HPC) section 35B. The turbine section 37 of FIG. 1 includes a high pressure turbine (HPT) section 37A and a low pressure turbine (LPT) section 37B. At least (or only) the LPC section 35A, the HPC section 35B, the combustor section 36, the HPT section 37A and the LPT section 37B collectively form a core 40 of the turbine engine 24. The aircraft propulsion system 22 and its turbine engine 24 of FIG. 1 also include a core flowpath 42 (e.g., an annular core flowpath) and a bypass flowpath 44 (e.g., an annular bypass flowpath). The core flowpath 42 extends sequentially through the LPC section 35A, the HPC section 35B, the combustor section 36, the HPT section 37A and the LPT section 37B from an airflow inlet 46 into the core flowpath 42 to a combustion products exhaust 48 out from the core flowpath 42. The bypass flowpath 44 extends through a bypass duct from an airflow inlet 50 into the bypass flowpath 44 to an airflow exhaust 52 from the bypass flowpath 44. The bypass flowpath 44 and its bypass duct are configured to bypass (e.g., are disposed radially outboard of and extend along) the engine core 40.

The propulsor section 34, the LPC section 35A, the HPC section 35B, the combustor section 36, the HPT section 37A and the LPT section 37B may be arranged sequentially along the propulsion system axis 28. The propulsor section 34 includes a bladed propulsor rotor 54; e.g., a fan rotor. The LPC section 35A includes a bladed low pressure compressor (LPC) rotor 55. The HPC section 35B includes a bladed high pressure compressor (HPC) rotor 56. The HPT section 37A includes a bladed high pressure turbine (HPT) rotor 57. The LPT section 37B includes a bladed low pressure turbine (LPT) rotor 58. These engine rotors 54-58 are housed within the propulsion system housing 26. The propulsion system housing 26 of FIG. 1, for example, includes an inner housing structure 60 (e.g., a core case structure) and an outer housing structure 62 (e.g., a propulsor case structure). The inner housing structure 60 may house one or more of the engine sections 35A-37B and the engine rotors 55-58. The outer housing structure 62 may house at least the propulsor section 34 and its propulsor rotor 54.

Each of the engine rotors 54-58 includes a rotor base (e.g., a disk or a hub) and a plurality of rotor blades. The rotor blades may be arranged into one or more stages axially along the respective engine rotor 54-58. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade. Note, although not shown for ease of illustration, each rotor blade stage of a respective engine rotor 55-58 may be disposed next to and upstream or downstream of a respective neighboring stage of stator vanes for that respective engine section 35A, 35B, 37A, 37B along the core flowpath 42. At least some of the rotor blade stages of a respective engine rotor 55-58 may also be disposed between a neighboring pair of upstream and downstream stages of stator vanes along the core flowpath 42.

The HPC rotor 56 is coupled to and rotatable with the HPT rotor 57. The HPC rotor 56 of FIG. 1, for example, is connected to the HPT rotor 57 through a high speed shaft 64. At least (or only) the HPC rotor 56, the HPT rotor 57 and the high speed shaft 64 collectively form a high speed rotating structure 66; e.g., a high speed spool of the turbine engine 24 and its engine core 40. The high speed rotating structure 66 of FIG. 1 and its members 56, 57 and 64 are rotatable about the propulsion system axis 28.

The LPC rotor 55 is coupled to and rotatable with the LPT rotor 58. The LPC rotor 55 of FIG. 1, for example, is connected to the LPT rotor 58 through a low speed shaft 68. At least (or only) the LPC rotor 55, the LPT rotor 58 and the low speed shaft 68 collectively form a low speed rotating structure 70; e.g., a low speed spool of the turbine engine 24 and its engine core 40. The low speed rotating structure 70 of FIG. 1 and its members 55, 58 and 68 are rotatable about the propulsion system axis 28.

The low speed rotating structure 70 is coupled to the propulsor rotor 54 through a drivetrain 72. This drivetrain 72 may be configured as a geared drivetrain, where a geartrain 74 (e.g., a transmission, a speed change device, an epicyclic geartrain, etc.) is disposed between and operatively couples the propulsor rotor 54 to the low speed rotating structure 70 and its LPT rotor 58. With this arrangement, the propulsor rotor 54 may rotate at a different (e.g., slower) rotational speed than the low speed rotating structure 70 and its LPT rotor 58. Here, the propulsor rotor 54 and the low speed rotating structure 70 may rotate in a common (the same) direction about the propulsion system axis 28 or in opposite directions about the propulsion system axis 28 depending, for example, upon the specific configuration of the geartrain 74. Alternatively, the drivetrain 72 may be configured as a direct-drive drivetrain, where the geartrain 74 is omitted. With such an arrangement, the propulsor rotor 54 rotates at a common (the same) rotational speed as the low speed rotating structure 70 and its LPT rotor 58.

During operation of the aircraft propulsion system 22 of FIG. 1, ambient air from an environment 76 external to the aircraft and its aircraft propulsion system 22 enters the aircraft propulsion system 22 and its turbine engine 24 through an airflow inlet 78. This air is propelled by the rotating propulsor rotor 54 in a downstream, aft direction towards the propulsion system aft end 32.

An outer stream of the air propelled by the rotating propulsor rotor 54 is directed into the bypass flowpath 44 through its bypass inlet 50. The air entering the bypass flowpath 44 may be referred to as "bypass air". This bypass air flows through the bypass flowpath 44 and is directed out of the aircraft propulsion system 22 through the bypass exhaust 52 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 54 is directed into the core flowpath 42 through its core inlet 46. The air entering the core flowpath 42 may be referred to as "core air". This core air is compressed by the LPC rotor 55 and the HPC rotor 56 and is directed into a combustion chamber 80 (e.g., annular combustion chamber) of a combustor 82 (e.g., annular combustor) in the combustor section 36. Fuel is injected into the combustion chamber 80 by one or more fuel injectors 84 and mixed with the compressed core air to provide a fuel-air mixture. This fuel-air mixture is ignited and combustion products thereof flow through and sequentially drive rotation of the HPT rotor 57 and the LPT rotor 58. The rotation of the HPT rotor 57 and the LPT rotor 58 respectively drive rotation of the HPC rotor 56 and the LPC rotor 55 and, thus, compression of the air received from the core inlet 46. The rotation of the LPT rotor 58 also drives rotation of the propulsor rotor 54 through the drivetrain 72.

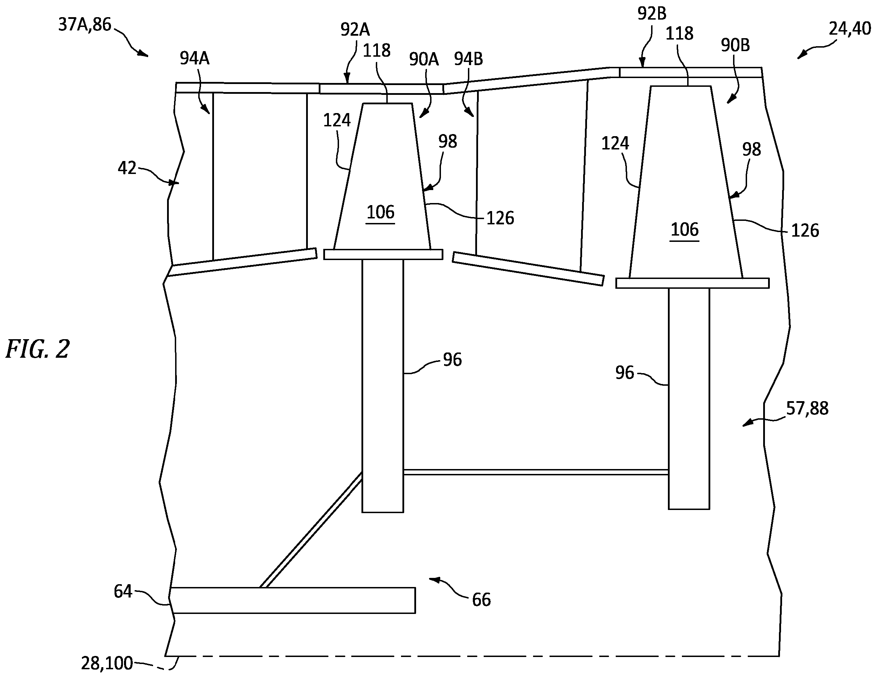

FIG. 2 illustrates a section 86 of the turbine engine 24. For ease of description, this engine section 86 is described below as the HPT section 37A in the turbine engine 24. However, it is contemplated the engine section 86 may alternatively be the LPT section 37B in the turbine engine 24 (see FIG. 1), the HPT section 35B in the turbine engine 24 (see FIG. 1), the LPT section 35A in the turbine engine 24 (see FIG. 1), or another section of the turbine engine 24 with (e.g., internally air cooled and/or coated) engine components which would benefit from inspections as described below.

The engine section 86 of FIG. 2 includes an engine rotor 88 (e.g., the HPT rotor 57) configured with a plurality of rotor stages 90A and 90B (generally referred to as "90"). The engine section 86 of FIG. 2 includes a respective outer rotor shroud 92A, 92B (generally referred to as "92") radially outboard of and circumscribing each rotor stage 90A, 90B, where each rotor shroud 92 may be configured as a blade outer air seal (BOAS) for the respective rotor stage 90. The engine section 86 of FIG. 2 also includes a plurality of stator vane structures 94A and 94B (generally referred to as "94") interspersed with the rotor stages 90 and the associated rotor shrouds 92. The first rotor stage 90A and its associated first rotor shroud 92A of FIG. 2, for example, are located next to and between the first stator vane structure 94A and the second stator vane structure 94B along the core flowpath 42. The second rotor stage 90B and its associated second rotor shroud 92B of FIG. 2 are located next to and downstream of the second stator vane structure 94B along the core flowpath 42. Here, the engine section 86 is shown as a two-stage section of the turbine engine 24; e.g., a two-stage HPT section. It is contemplated, however, the engine section 86 and its engine rotor 88 may alternatively be configured with a single stage or more than two stages.

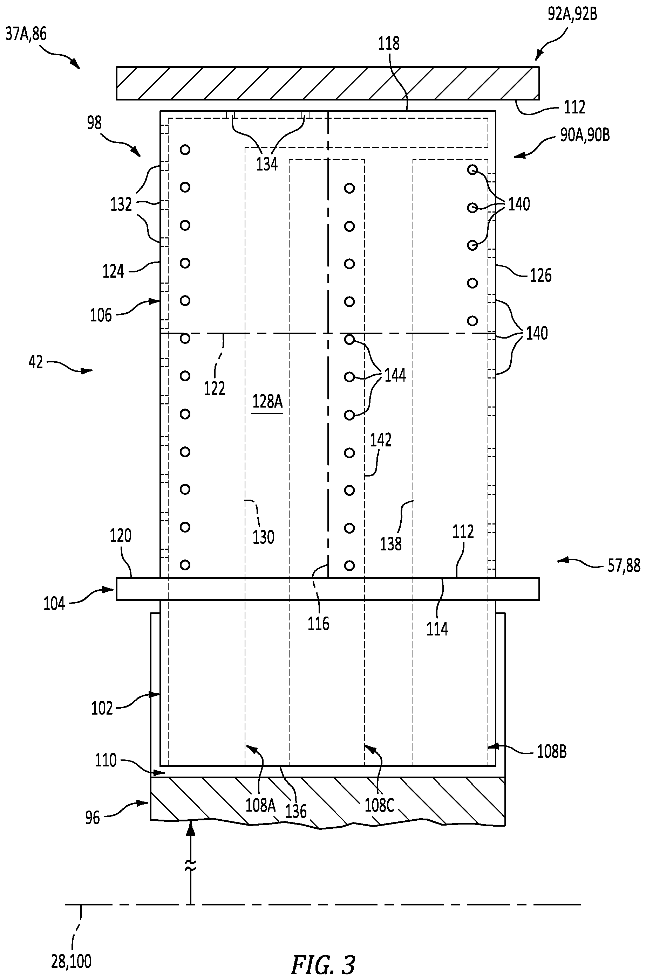

Each rotor stage 90 includes a rotor base 96 (e.g., a disk or a hub) and a plurality of rotor blades 98 (e.g., turbine blades). The rotor blades 98 are arranged and may be equispaced circumferentially around the rotor base 96 and a rotational rotor axis 100 of the engine rotor 88 (e.g., the propulsion system axis 28) in an array; e.g., an annular array. Referring to FIG. 3, each of the rotor blades 98 includes an attachment 102, a platform 104 and an airfoil 106. Each rotor blade 98 may also include one or more internal cooling circuits 108A-C (generally referred to as "108").

The blade attachment 102 is disposed radially inboard of the blade platform 104. The blade attachment 102 is configured to mount the respective rotor blade 98 to the rotor base 96. The blade attachment 102 of FIG. 3, for example, is configured as a blade root such as a dovetail root or a firtree root. This blade attachment 102 is inserted into and mated with a respective receptacle 110 (e.g., a slot such as a dovetail slot or a firtree slot) in the rotor base 96 to mechanically attach the respective rotor blade 98 to the rotor base 96.

The blade platform 104 is disposed radially between a radial outer end 112 of the blade attachment 102 and a radial inner end 114 (e.g., a base) of the blade airfoil 106. The blade platform 104 is also formed integral with or otherwise connected to the blade attachment 102 and the blade airfoil 106. The blade platforms 104 in each rotor stage 90 are collectively configured to form a radial inner peripheral boundary of a section of the core flowpath 42 that extends across the respective rotor stage 90.

The blade airfoil 106 is disposed radially outboard of the blade platform 104. The blade airfoil 106 of FIG. 3, for example, projects spanwise along a span line 116 of the respective rotor blade 98 and its blade airfoil 106 (e.g., generally radially respective to the rotor axis 100) out from the blade platform 104 to a tip 118 of the blade airfoil 106, and more generally to a tip of the respective rotor blade 98. The airfoil tip 118 of FIG. 3 is disposed radially inboard of and next to, but spaced slightly inward from, an inner flowpath surface 120 of the respective rotor shroud 92. The blade airfoil 106 of FIG. 3 thereby projects spanwise out from an outer flowpath surface 120 of the blade platform 104, substantially radially across the core flowpath 42, to the airfoil tip 118.

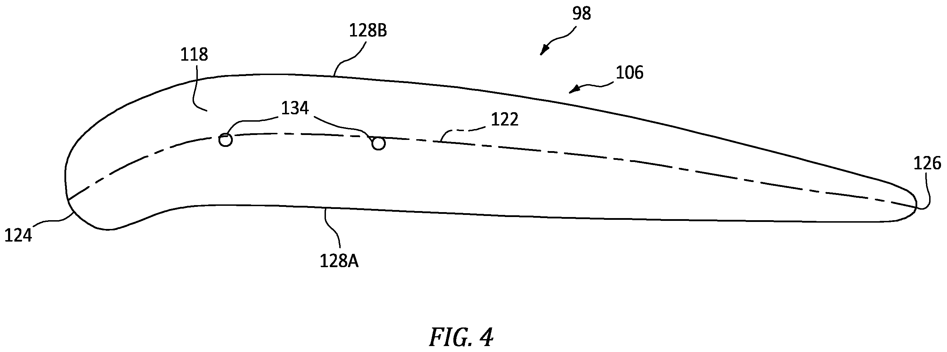

Referring to FIG. 4, the blade airfoil 106 extends longitudinally along a mean line 122 (e.g., a camber line) of the blade airfoil 106 from a leading edge 124 of the blade airfoil 106 to a trailing edge 126 of the blade airfoil 106. The blade airfoil 106 extends laterally (e.g., widthwise) between opposing sides 128A and 128B (generally referred to as "128") of the blade airfoil 106. The airfoil first side 128A of FIG. 4 is a concave, pressure side of the blade airfoil 106. The airfoil second side 128B of FIG. 4 is a convex, suction side of the blade airfoil 106. The airfoils sides 128 extend longitudinally between and may meet at the airfoil leading edge 124 and the airfoil trailing edge 126.

Referring to FIG. 3, each cooling circuit 108 is configured to flow cooling air internally within the respective rotor blade 98 and its blade airfoil 106 to facilitate internal air cooling of the respective rotor blade 98 and its blade airfoil 106. Each of the cooling circuits 108 may also be configured to deliver the cooling air to one or more cooling apertures (e.g., film cooling apertures, effusion apertures, etc.) to film cool and/or otherwise facilitate external air cooling of the blade airfoil 106.

The first cooling circuit 108A may be configured as a leading edge and/or tip cooling circuit. The first cooling circuit 108A of FIG. 3, for example, includes a first circuit channel 130, one or more leading edge cooling apertures 132 and/or one or more tip cooling apertures 134. The first circuit channel 130 of FIG. 3 projects spanwise into the respective rotor blade 98 from a radial inner end 136 of the blade attachment 102 towards (or to) the airfoil tip 118. The first circuit channel 130 of FIG. 3, in particular, projects spanwise through the blade attachment 102 and the blade platform 104 and into the blade airfoil 106. The first circuit channel 130 is fluidly coupled to each of the first circuit cooling apertures 132, 134. The leading edge cooling apertures 132 are arranged spanwise along the airfoil leading edge 124 and may be formed in one or both of the airfoil sides 128. The tip cooling apertures 134 are arranged longitudinally along and may be formed in the airfoil tip 118 (see also FIG. 4).

The second cooling circuit 108B may be configured as a trailing edge cooling circuit. The second cooling circuit 108B of FIG. 3, for example, includes a second circuit channel 138 and one or more trailing edge cooling apertures 140. The second circuit channel 138 of FIG. 3 projects spanwise into the respective rotor blade 98 from the attachment inner end 136 towards (or to) the airfoil tip 118. The second circuit channel 138 of FIG. 3, in particular, projects spanwise through the blade attachment 102 and the blade platform 104 and into the blade airfoil 106. The second circuit channel 138 is fluidly coupled to each of the trailing edge cooling apertures 140. The trailing edge cooling apertures 140 are arranged spanwise along the airfoil trailing edge 126 and may be formed in one or both of the airfoil sides 128.

The third cooling circuit 108C may be configured as an intermediate side cooling circuit. The third cooling circuit 108C of FIG. 3, for example, includes a third circuit channel 142 and one or more side cooling apertures 144. The third circuit channel 142 of FIG. 3 projects spanwise into the respective rotor blade 98 from the attachment inner end 136 towards (or to) the airfoil tip 118. The third circuit channel 142 of FIG. 3, in particular, projects spanwise through the blade attachment 102 and the blade platform 104 and into the blade airfoil 106. The third circuit channel 142 is fluidly coupled to each of the side cooling apertures 144. The side cooling apertures 144 may be arranged spanwise along the blade airfoil 106 and may be formed in one or both of the airfoil sides 128.

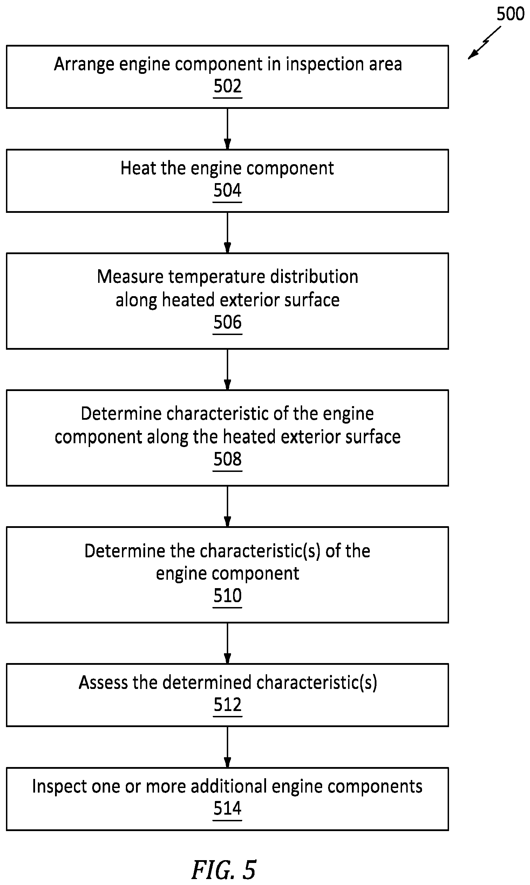

FIG. 5 is a flow diagram of a method 500 for inspecting one or more components of an aircraft powerplant. For ease of description, this inspection method 500 is described below with reference to the aircraft powerplant 20 of FIG. 1, and the components to be inspected (inspected components) are described below as components of the turbine engine 24; e.g., turbine engine components. More particularly, the inspected components are described below as a respective to-be-inspected set of the rotor blades 98 of FIGS. 2-4. The present disclosure, however, is not limited to inspecting such an exemplary engine component. For example, the method 500 may alternatively be performed to inspect one or more of the rotor shrouds 92 and/or one or more of the stator vane structures 94. Moreover, it is contemplated the inspection method 500 may alternatively be performed for inspecting component(s) of various other powerplant arrangements.

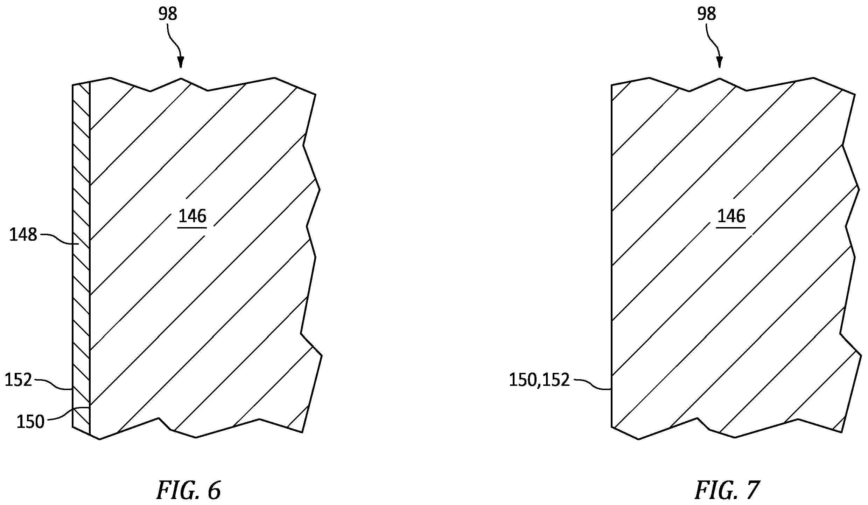

Referring to FIG. 6, each rotor blade 98 and, more generally, each inspected component includes a body 146 and an exterior coating 148. The body 146 is configured to provide the rotor blade 98 with its general exterior geometry, its structural features and (when applicable) its internal features (e.g., the cooling circuits 108 of FIG. 3). This body 146 may form at least eighty-five percent (85%), ninety percent (90%), ninety-five percent (95%) or more of the respective rotor blade 98. The body 146 may be constructed from a metal; e.g., a pure metal, a metal alloy, a metal matrix composite (MMC). The metal may be or otherwise include, but is not limited to, nickel (Ni), titanium (Ti), steel, and/or the like. The exterior coating 148 is disposed over and bonded to an exterior 150 of the body 146. This exterior coating 148 may thereby partially or completely cover the exterior 150 of the body 146 to form part of or an entirety of an exterior 152 of the rotor blade 98. The exterior coating 148 may be configured as a thermal barrier coating (TBC), an environmental coating, an erosion coating, a wear coating, a sealant and/or another protective coating for the underlying body 146. While generally shown as a single homogeneous coating in FIG. 6, it is contemplated the exterior coating 148 may alternatively be a coating system with one or more layers of a common coating material and/or one or more layers of different coating materials. The exterior coating 148 may be or otherwise include a ceramic coating, a metal coating and/or otherwise. The inspection method 500 of the present disclosure, however, is not limited to inspecting coated inspected components. For example, referring to FIG. 7, each rotor blade 98 and, more generally, each inspected component may alternatively be configured without an exterior coating. The body 146 of FIG. 7, for example, partially or completely forms the exterior 152 of the rotor blade 98.

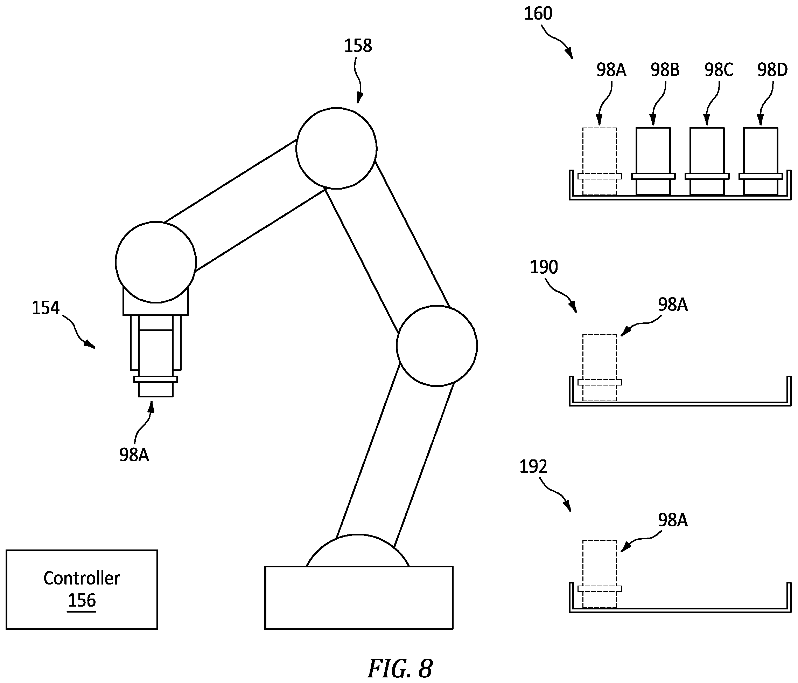

In step 502, referring to FIG. 8, a first of the rotor blades 98A is arranged in an inspection area 154. A controller 156, for example, may signal a robotic manipulator 158 to (a) pick up the first rotor blade 98A at a source area 160, (b) move the first rotor blade 98A from the source area 160 to the inspection area 154, and (c) hold the first rotor blade 98A in the inspection area 154 for inspection. However, it is contemplated the robotic manipulator 158 may alternatively place the first rotor blade 98A in a fixture for holding that first rotor blade 98A in the inspection area 154 for inspection. At the beginning of the inspection method 500, the first rotor blade 98A may be one of a plurality of the rotor blades (e.g., 98A-D (generally referred to as "98")) located at the source area 160 for subsequent inspection. At this source area 160, the to-be-inspected rotor blades 98 may be arranged in a bin or other open container or fixture which orients those rotor blades 98 for picking up by the robotic manipulator 158. For ease of description, the robotic manipulator 158 is generally described herein as a multi-axis robotic arm with a gripping end effector. The present disclosure, however, is not limited to such an exemplary robotic manipulator. For example, it is contemplated the robotic manipulator 158 may alternatively be configured as gantry manipulator. Moreover, in other embodiments, it is contemplated one or more of the operations performed herein by the robotic manipulator 158 may alternatively be performed manually by a technician.

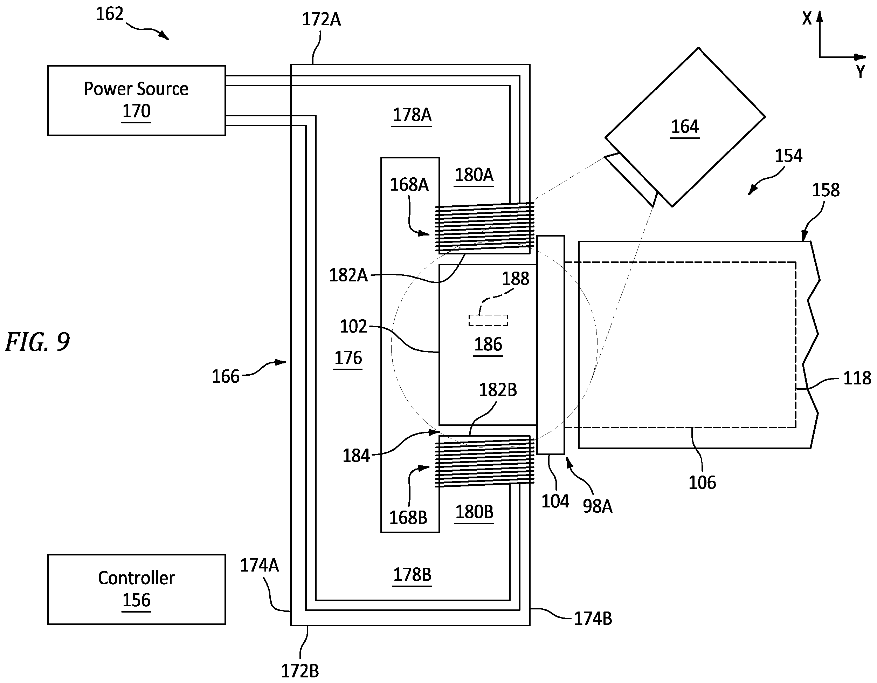

Referring to FIG. 9, a non-contact heater 162 and a non-contact temperature sensor 164 are disposed in the inspection area 154 for the inspection method 500. The non-contact heater 162 is configured to heat the inspected component; e.g., the first rotor blade 98A. The non-contact heater 162 may be configured as or otherwise include an induction heater. The non-contact heater 162 of FIG. 9, for example, includes a core 166 (e.g., a ferrite core), one or more induction coils 168A and 168B (generally referred to as "168") and a power source 170.

The heater core 166 of FIG. 9 extends lengthwise (e.g., along an x-axis) between opposing lengthwise ends 172A and 172B (generally referred to as "172") of the heater core 166. The heater core 166 of FIG. 9 extends widthwise (e.g., along a y-axis) between opposing widthwise sides 174A and 174B (generally referred to as "174") of the heater core 166. The heater core 166 of FIG. 9 is configured with a channeled body; e.g., C-shaped body. The heater core 166 of FIG. 9, for example, includes a base section 176, one or more offset sections 178A and 178B (generally referred to as "178") and one or more coil sections 180A and 180B (generally referred to as "180"). The core offset sections 178 are respectively disposed at the core lengthwise ends 172. Each of these core offset sections 178 is formed integral with or otherwise connected to the core base section 176. Each core offset section 178 projects widthwise out from the core base section 176 to a distal end of the respective core offset section 178 at the second core widthwise side 174B. The core coil sections 180 are arranged lengthwise between the core offset sections 178. Each of these core coil sections 180 is formed integral with or otherwise connected to a respective one of the core offset sections 178, at the second core widthwise side 174B. Each core coil section 180A, 180B projects lengthwise out from the respective core offset section 178A, 178B (lengthwise towards the other core coil section 180B, 180A) to a distal end 182A, 182B (generally referred to as "182") of the respective core coil section 180A, 180B. The ends 182 of the core coil sections 180 are lengthwise spaced from one another to form a component receptacle 184 (e.g., a channel or a slot) lengthwise between the core coil sections 180 for receiving the respective component to be inspected; e.g., the first rotor blade 98A.

Each induction coil 168 is arranged with a respective one of the core coil sections 180 at (or near) the respective end 182 of the core coil section 180. Each induction coil 168 of FIG. 9, for example, is configured as an electrical conductor (e.g., a metal wire) wrapped one or more times (e.g., ten or more times) circumferentially around the respective core coil section 180.

The power source 170 is electrically coupled to each of the induction coils 168. This power source 170 is configured to apply a periodic (e.g., alternating) electrical current to the induction coils 168 to excite those induction coils 168 during operation of the non-contact heater 162.

The non-contact temperature sensor 164 is configured to (e.g., optically) measure a temperature distribution along at least one heated exterior surface of the inspected component; e.g., the first rotor blade 98A. The non-contact temperature sensor 164 may be configured as or otherwise include an infrared (IR) camera.

During the arranging step 502, the controller 156 may signal the robotic manipulator 158 to arrange the first rotor blade 98A with the non-contact heater 162 and the non-contact temperature sensor 164. The robotic manipulator 158, for example, may arrange a respective portion of the first rotor blade 98A such as its blade attachment 102 in the component receptacle 184. In the component receptacle 184, the first rotor blade 98A and its blade attachment 102 are disposed lengthwise next to, but spaced from, each core coil section 180 and its end 182 by a respective air gap. The first rotor blade 98A and its blade attachment 102 are also disposed in line of sight with the non-contact temperature sensor 164.

In step 504, the first rotor blade 98A and its blade attachment 102 are heated to an elevated temperature. The controller 156, for example, may signal the non-contact heater 162 and its power source 170 to energize the induction coils 168 using the periodic electrical current. The induction coils 168 generate electromagnetic waves, and the core coil sections 180 may focus these electromagnetic waves into the first rotor blade 98A and its blade attachment 102. The electromagnetic waves generate eddy currents in the first rotor blade 98A and its blade attachment 102, which eddy currents interact with (e.g., excite molecules of) the metal forming the body 146 (see FIG. 6, or FIG. 7) of the first rotor blade 98A and its blade attachment 102. The non-contact heater 162 thereby inductively heats the first rotor blade 98A and its blade attachment 102 to the elevated temperature. Moreover, an exterior surface 186 of the first rotor blade 98A and its blade attachment 102 facing the non-contact temperature sensor 164 is also heated to an elevated temperature.

In step 506, a temperature distribution along the heated exterior surface 186 is measured. The controller 156, for example, may signal the non-contact temperature sensor 164 to (e.g., optically) measure the temperature distribution along the heated exterior surface 186. This temperature distribution may be measured for an entirety of the heated exterior surface 186, or alternatively at least (or only) a select region of the heated exterior surface 186. The temperature distribution may map a surface temperature measured (e.g., lengthwise and widthwise) along the heated exterior surface 186. The temperature distribution may thereby map temperature gradients (e.g., lengthwise and widthwise) across the heated exterior surface 186. The non-contact temperature sensor 164 may subsequently provide measurement data back to the controller 156 indicative of the temperature distribution. Note, this measurement step 506 may be performed during or (e.g., just) subsequent to the heating of the first rotor blade 98A and its blade attachment 102.

In step 508, a characteristic of the first rotor blade 98A along the heated exterior surface 186 is determined. For ease of description, the characteristic being determined is described herein as an internal defect 188 (if present) in the metal forming the body 146 (see FIG. 6, or FIG. 7) of the first rotor blade 98A and its blade attachment 102. Herein, the term "defect" may describe a physical anomaly present within the inspected component (e.g., the first rotor blade 98A) which may negatively affect a useful life of that component and/or performance of that component. Examples of the internal defect 188 include, but are not limited to, a crack, a void, corrosion, a density variation, an area of poor solidification (e.g., sintering) and/or the like. The inspection method 500 of the present disclosure, however, is not limited to determining such an exemplary characteristic.

During the characteristic determination step 508, the controller 156 may process the measurement data received from the non-contact temperature sensor 164 using a program that correlates the measured temperature distribution to the characteristic being determined. For example, the controller 156 may compare a signature of the measured temperature distribution to a signature of an expected temperature distribution to look for differences between those temperature distributions. The controller 156 may then use a program to analyze any anomalies in the measured temperature distribution (e.g., the difference(s) between the temperature distributions) to determine a cause for those anomalies. For example, the controller 156 may determine one or more anomalies may be caused by one or more acceptable dimensional deviations within tolerance for the first rotor blade 98A. In another example, the controller 156 may determine one or more anomalies may be caused by one or more internal defects 188 within the first rotor blade 98A and its blade attachment 102. For example, a defect such as a crack may not conduct the eddy currents thereacross during the heating step 504. Therefore, a localized region of an unexpected low temperature area may identify presence of an internal defect such as a crack within the metal forming the body 146 (see FIG. 6, or FIG. 7) of the first rotor blade 98A and its blade attachment 102. In some embodiments, the controller 156 may utilize artificial intelligence (AI) and/or machine learning to provide more accurate correlations which, for example, can read a signature of the temperature distribution to locate the apertures, internal ribs, walls and/or other features of the first rotor blade 98A.

In step 510, the steps 504, 506 and 508 may be repeated to determine one or more characteristics of the first rotor blade 98A along one or more other heat exterior surfaces of the first rotor blade 98A. The controller 156, for example, may signal the robotic manipulator 158 to reverse an orientation of the first rotor blade 98A and the steps 504, 506 and 508 may be repeated. In this fashion, a portion of the first rotor blade 98A along one or more exterior surfaces of the blade attachment 102, a portion of the first rotor blade 98A along one or more exterior surfaces of the blade platform 104, and/or a portion of the first rotor blade 98A along one or more exterior surfaces of the blade airfoil 106 may be determined or otherwise inspected.

In step 512, the determined characteristic(s) are assessed. The controller 156, for example, may assess whether the inspected first rotor blade 98A satisfies a design specification for that rotor blade type (e.g., a rotor blade model number). For example, where no internal defects are identified during the step(s) 508 and/or 510, the controller 156 may determine the inspected first rotor blade 98A satisfies the design specification. Note, in some embodiments, the controller 156 may (or may not) also determine the inspected first rotor blade 98A satisfies the design specification where that first rotor blade 98A is identified as including a relatively small (e.g., de minimums) internal defect. In this situation, referring to FIG. 8, the controller 156 may signal the robotic manipulator 158 to (a) move the first rotor blade 98A from the inspection area 154 to a designated area 190 for compliant rotor blades, and (b) place the first rotor blade 98A at the designated area 190 for compliant rotor blades. At this designated area 190, the inspected first rotor blade 98A may be arranged in an acceptance bin or other open container or fixture for subsequent use. By contrast, where one or more relatively large internal defects 188 are identified during the step(s) 508 and/or 510, the controller 156 may determine the inspected first rotor blade 98A does not satisfy the design specification. In this situation, the controller 156 may signal the robotic manipulator 158 to (a) move the first rotor blade 98A from the inspection area 154 to a designated area 192 for non-compliant rotor blades, and (b) place the first rotor blade 98A at the designated area 192 for non-compliant rotor blades. At this designated area 192, the inspected first rotor blade 98A may be arranged in a rejection bin or other open container or fixture for subsequent disposal, further inspection, and/or remanufacture.

In step 514, the steps 502, 504, 506, 508, 510 and 512 may be repeated one or more times to facilitate inspections of the other rotor blades (e.g., 98B-D).

In some embodiments, the inspection method 500 may be performed substantially or completely autonomously. Such autonomous inspection may speed up the inspection method as well as ensure data obtained through the inspection method is recorded and tracked.

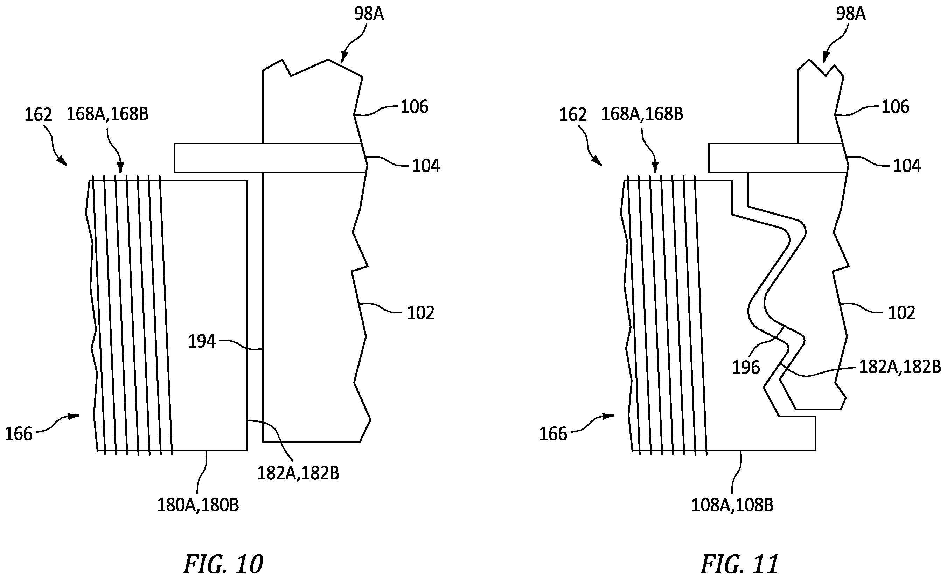

In some embodiments, referring to FIGS. 10 and 11, a geometric contour of the end 182 of each core coil section 180 may be configured to match (e.g., conform to, have an identical shape as, etc.) a geometric contour of a portion of the inspected component (e.g., the rotor blade 98) adjacent that respective core coil section 180 during the inspection. The contour of the end 182 of each core coil section 180 of FIGS. 10 and 11 matches the adjacent portion of the inspected component (e.g., the rotor blade 98) when viewed in a lengthwise and widthwise extending reference plane. In FIG. 10, the contour of the end 182 of each core coil section 180 is flat and planar to match, for example, a respective end 194 of the blade attachment 102. In FIG. 11, the contour of the end 182 of each core coil section 180 undulates (e.g., is wavy and/or otherwise curved) to match, for example, a respective side 196 of the blade attachment 102.

While the inspection method 500 is described above as heating up and inspecting the blade attachment 102 of each rotor blade 98 (the inspected component), the present disclosure is not limited thereto. For example, the blade platform 104 of each rotor blade 98 may be disposed between the core coil sections 180 and their induction coils 168 for heating and inspection. In another example, the blade airfoil 106 of each rotor blade 98 may be disposed between the core coil sections 180 and their induction coils 168 for heating and inspection.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of inspection, comprising:
arranging a first induction coil and a second induction coil with a turbine engine component, the turbine engine component comprising an exterior surface;
heating the turbine engine component using the first induction coil and the second induction coil such that the exterior surface is a heated exterior surface;
measuring a temperature distribution along the heated exterior surface to provide measurement data indicative of the temperature distribution; and
determining a characteristic of the turbine engine component using the measurement data.

2. The method of claim 1, wherein the characteristic of the turbine engine component comprises presence of a defect in the turbine engine component.

3. The method of claim 1 or 2, wherein the turbine engine component comprises a body and a coating over the body, and the characteristics of the turbine engine component is a characteristic of the body.

4. The method of claim 1, 2 or 3, wherein the turbine engine component comprises a rotor blade,
wherein, optionally, an attachment of the rotor blade comprises the exterior surface.

5. The method of any preceding claim, wherein the turbine engine component is disposed between the first induction coil and the second induction coil.

6. The method of any preceding claim, wherein:
a heater comprises the first induction coil, the second induction coil and a core;
the first induction coil is wrapped around a first section of the core; and
the second induction coil is wrapped around a second section of the core,
wherein, optionally, the core is C-shaped.

7. The method of claim 6, wherein the turbine engine component projects into a channel in the core, and the first section of the core and the second section of the core are disposed to opposing sides of the channel.

8. The method of claim 6 or 7, wherein:
an end of the first section of the core is disposed next to and spaced from a first exterior portion of the turbine engine component; and
an end of the second section of the core is disposed next to and spaced from a second exterior portion of the turbine engine component.

9. The method of claim 8, wherein at least one of:
the end of the first section of the core is contoured to match a contour of the first exterior portion of the turbine engine component; and/or
the end of the second section of the core is contoured to match a contour of the second exterior portion of the turbine engine component.

10. The method of any preceding claim, wherein the exterior surface is located between the first induction coil and the second induction coil.

11. The method of any preceding claim, wherein:
the temperature distribution is measured using a non-contact temperature sensor; or
the temperature distribution is measured using an infrared camera.

12. The method of any preceding claim, further comprising determining whether the characteristic of the turbine engine component satisfies a specification for the turbine engine component.

13. The method of claim 12, further comprising:
moving the turbine engine component into a designated area using a robotic manipulator when the characteristic of the turbine engine component is determined to satisfy the specification for the turbine engine component; or
moving the turbine engine component into a designated area using a robotic manipulator when the characteristic of the turbine engine component is determined not to satisfy the specification for the turbine engine component.

14. A method of inspection, comprising:
arranging a heater with a turbine engine component, the heater comprising a ferrite core and a first induction coil wrapped around the ferrite core, and the turbine engine component comprising an exterior surface;
heating the turbine engine component using the first induction coil such that the exterior surface becomes a heated exterior surface;
measuring a temperature distribution along the heated exterior surface to provide measurement data indicative of the temperature distribution; and
determining presence of a defect in the turbine engine component based on the measurement data,
wherein, optionally:
the first induction coil is wrapped around a first section of the ferrite core;
the heater further comprises a second induction coil wrapped around a second section of the ferrite core; and
the heating of the turbine engine component comprises heating the turbine engine component using the first induction coil and the second induction coil such that the exterior surface is the heated exterior surface.

15. A method of inspection, comprising:
moving a turbine engine component to an inspection area using a robotic manipulator, the turbine engine component comprising an exterior surface;
heating the turbine engine component using one or more induction coils such that the exterior surface becomes a heated exterior surface;
measuring a temperature distribution along the heated exterior surface to provide measurement data indicative of the temperature distribution;
determining a characteristic of the turbine engine component using the measurement data, and one of:
moving the turbine engine component into a first designated area using the robotic manipulator when the characteristic of the turbine engine component is determined to satisfy a specification for the turbine engine component; and
moving the turbine engine component into a second designated area using the robotic manipulator when the characteristic of the turbine engine component is determined to not satisfy the specification for the turbine engine component.
